(19)

Europäisches
Patentamt
European
Patent Office
Office européen
des brevets

(11) **EP 1 923 451 A1**

(12) **EUROPEAN PATENT APPLICATION**
published in accordance with Art. 153(4) EPC

(43) Date of publication:
**21.05.2008 Bulletin 2008/21**

(51) Int Cl.:
*C10G 53/08* [(2006.01)]  *C10G 17/095* [(2006.01)]
*C10G 25/00* [(2006.01)]  *C10G 29/04* [(2006.01)]
*C10G 29/16* [(2006.01)]  *H01M 8/06* [(2006.01)]

(21) Application number: **06781535.7**

(22) Date of filing: **25.07.2006**

(86) International application number:
**PCT/JP2006/314623**

(87) International publication number:
**WO 2007/015391 (08.02.2007 Gazette 2007/06)**

(84) Designated Contracting States:
**DE FR GB**

(30) Priority: **01.08.2005 JP 2005223082**

(71) Applicant: **Japan Energy Corporation**
**Tokyo 105-0001 (JP)**

(72) Inventors:
• **TOIDA, Yasuhiro,**
**Japan Energy Corporation**
**Toda-shi, Saitama 335-0026 (JP)**

• **SAITO, Toru,**
**Japan Energy Corporation**
**Toda-shi, Saitama 335-0026 (JP)**

(74) Representative: **Forstmeyer, Dietmar et al**
**BOETERS & LIECK**
**Oberanger 32**
**80331 München (DE)**

(54) **METHOD FOR DESULFURIZATION OF HYDROCARBON OIL**

(57) Disclosed is a method for desulfurization of a hydrocarbon oil (e.g., kerosene which is a raw fuel for a fuel cell) which can effectively remove benzothiophenes and dibenzothiophenes contained in the hydrocarbon oil under mild conditions to produce a desulfurized hydrocarbon oil having a significantly low sulfur content.

The method comprises the step of desulfurizing the hydrocarbon oil such as kerosene containing benzothiophenes and dibenzothiophenes with the combination of a solid acid-type desulfurizing agent and an active carbon-type desulfurizing agent. This method can provide a hydrocarbon oil having a significantly low sulfur content. By using the hydrocarbon oil, the operation or maintenance of a fuel cell system can be made easily, a fuel cell itself can be miniaturized in size, and the lifetime of a desulfurizing agent in a desulfurization apparatus equipped in a fuel cell system can be prolonged.

**Description**

TECHNICAL FIELD

The present invention relates to a method for desulfurization of hydrocarbon oil used as a raw material for generating hydrogen used in fuel cells, particularly a method for desulfurization of hydrocarbon oil which contains sulfur compounds such as benzothiophenes and dibenzothiophenes.

BACKGROUND ART

As a method for desulfurization of hydrocarbon oil such as kerosene used for stationary fuel cells for home use and commercial use, a chemisorption desulfurization method in which a nickel-based desulfurization agent is used at about 200°C is investigated. However, the chemisorption desulfurization method has problems, such as energy consumed for heating, time required for starting the fuel cell, a complicated system required for carrying out under pressure in order to prevent evaporation of the hydrocarbon oil, and the like. Although a nickel-based desulfurization agent containing copper maintains a certain degree of activity at a low temperature of about 150°C, the improvement is still insufficient to solve these problems. In addition, the nickel-based desulfurization agent must be reduced before use. The reduced nickel-based desulfurization agent, however, causes a rapid exothermic reaction when coming in contact with oxygen and, thereby the activity decreases. Thus, there are problems to be solved in the method of storing the nickel-based desulfurization agent and in the shutdown procedure. Furthermore, since a nickel compound has toxicity, a strict control of the nickel-based desulfurization agent is necessary when fuel cells are popularly used at ordinary home (Patent Documents 1 to 4).

A physical-adsorption desulfurization method using zeolite, activated carbon, and the like at about ambient temperature is also investigated. However, commercial kerosene contains aromatic compounds which are competitively adsorbed with sulfur compounds. In particular, there are no physical-adsorption agents having high performance of removing benzothiophenes which make up a substantial portion of sulfur compounds. A very large amount of adsorbent is needed for decreasing the sulfur content of kerosene to a desired level. The method is thus not useful in practice (Patent Documents 5 to 7).

Benzothiophenes and dibenzothiophenes are major sulfur compounds contained in commercial kerosene. The content of benzothiophenes is particularly large, in most cases, 70% or more of the total sulfur content of kerosene. However, removal of dibenzothiophenes is more difficult than removal of benzothiophenes. Removal of alkyl dibenzothiophenes which have many alkyl groups is particularly difficult.

Therefore, a desulfurization agent and a desulfurization method for sulfur compounds capable of efficiently removing both benzothiophenes and dibenzothiophenes, which require neither a reducing treatment nor hydrogen and can be operated at a temperature from an ambient temperature to about 150°C without applying pressure, have been demanded.

Since sufficient desulfurization performance cannot be obtained by a simple physical-adsorption method, the inventors of the present invention have also developed a desulfurization method using a combination of a chemical reaction and physical adsorption. In addition, the inventors have found that a thiophene ring is highly reactive and reacts with a benzene ring in the presence of an acidic catalyst at 100°C or less to produce a heavier compound. Furthermore, the inventors have confirmed that although the higher temperature, the larger reaction rate, the reaction proceeds even at a low temperature by using a solid superacid catalyst with strong acidity. A solid acid desulfurization agent with a large specific surface area is able to physically adsorb heavy sulfur compounds which are reaction products. It was confirmed that benzothiophenes contained in the commercial kerosene are removable without using hydrogen at about ambient temperature by using a solid acid desulfurization agent with a large specific surface area and by combining a chemical reaction with physical adsorption. However, the desulfurization performance rapidly decreases when alkyl dibenzothiophenes having many alkyl groups are treated (Patent Document 8).

[Patent Document 1] JP-B-H06-65602
[Patent Document 2] JP-B-H07-115842
[Patent Document 3] Japanese Patent No. 3410147
[Patent Document 4] Japanese Patent No. 3261192
[Patent Document 5] WO 2003/097771
[Patent Document 6] JP-A-2003-49172
[Patent Document 7] JP-A-2005-2317
[Patent Document 8] PCT/JP05/01065 (WO 2005/073348)

DISCLOSURE OF THE INVENTION

Problems to be Solved by the Invention

The present invention provides a method for desulfurization of hydrocarbon oil such as kerosene containing benzothiophenes and dibenzothiophenes to be used as a raw fuel for fuel cells. Specifically, an object of the present invention is to provide a method for desulfurization of hydrocarbon oil, which can efficiently remove sulfur compounds in the hydrocarbon oil under comparatively mild conditions, makes it comparatively easy to start and maintain a fuel cell system, and, as a result, simplifies the fuel cell system itself.

Means for Solving the Problems

As a result of extensive studies in order to attain the above object, the inventors of the present invention have found that sulfur compounds such as benzothiophenes and dibenzothiophenes included in a hydrocarbon oil such as kerosene can be efficiently removed under comparatively mild conditions by using two or three types of desulfurization agents in combination. This finding has led to the completion of the present invention.

Specifically, the present invention provides a method for desulfurization of hydrocarbon oil such as kerosene containing benzothiophenes and dibenzothiophenes using a solid acid desulfurization agent and an activated carbon desulfurization agent in combination.

It is preferable in the desulfurization method of the present invention to remove all or a part of the dibenzothiophenes in hydrocarbon oil using an activated carbon desulfurization agent and then to remove all or a part of the benzothiophenes using a solid acid desulfurization agent. It is also possible to remove all or a part of the benzothiophenes and the dibenzothiophenes in hydrocarbon oil using a solid acid desulfurization agent and then to remove all or a part of the remaining dibenzothiophenes using an activated carbon desulfurization agent. The hydrocarbon oil is preferably kerosene.

Sulfur removal is preferably carried out at a temperature of 100°C or less when the activated carbon desulfurization agent is used, and 5 to 150°C when a solid acid desulfurization agent is used.

The solid acid desulfurization agent is preferably at least one solid superacid selected from a group consisting of sulfated zirconia, sulfated alumina, sulfated tin oxide, sulfated iron oxide, tungstated zirconia, and tungstated tin oxide.

The activated carbon desulfurization agent preferably comprises a carbon material having a specific surface area of 500 $m^2/g$ of more, and a micropore specific surface area (Smicro [$m^2/g$]), a micropore external pore volume (Vext [$cm^3/g$]) and a micropore external specific surface area (Sext [$m^2/g$]) satisfying the following formula (1),

$$\text{Smicro} \times 2 \times \text{Vext/Sext} > 3.0 \qquad (1)$$

Moreover, it is preferable in the desulfurization method of the present invention that the hydrocarbon oil is desulfurized using the solid acid desulfurization agent and the activated carbon desulfurization agent, after that further treated with a metallic desulfurization agent to remove a very small amount of sulfur compounds remained.

It is preferable to remove the very small amount of sulfur compounds at 10 to 300°C, more preferably at 100 to 250°C, and particularly preferably at 120 to 200°C. The metallic desulfurization agent is preferably a copper oxide-based desulfurization agent and/or a nickel-containing desulfurization agent.

It is preferable to remove all or a part of the dibenzothiophenes using an activated carbon desulfurization agent and then to remove all or a part of the benzothiophenes using a solid acid desulfurization agent in at least one location selected from a fuel cell system, a movable tank storage, a service station, an oil terminal, and a refinery.

Alternatively, it is possible to remove all or a part of the dibenzothiophenes using an activated carbon desulfurization agent in at least one location selected from a movable tank storage, a service station, an oil terminal, and a refinery, and then to remove all or a part of the benzothiophenes using a solid acid desulfurization agent in a fuel cell system.

It is also possible to remove all or a part of the benzothiophenes and the dibenzothiophenes in the hydrocarbon oil using a solid acid desulfurization agent and then to remove all or a part of the remaining dibenzothiophenes using an activated carbon desulfurization agent in at least one location selected from a fuel cell system, a movable tank storage, a service station, an oil terminal, and a refinery.

It is preferable to reduce the sulfur content in the hydrocarbon oil to 20 ppb or less after desulfurization.

Effect of the Invention

According to the desulfurization method of the present invention, sulfur compounds contained in hydrocarbon oil such as kerosene used as a raw fuel for a fuel cell can be efficiently removed to an extremely low concentration under comparatively mild conditions by using a solid acid desulfurization agent and an activated carbon desulfurization agent, and, if necessary, a metallic desulfurization agent in combination. For this reason, the desulfurization equipment in a fuel cell system needs to have neither high desulfurization capability nor a large-scale desulfurization capacity. Therefore, it is possible to start and maintain the fuel cell system comparatively easily, and to simplify the system.

BEST MODE FOR CARRYING OUT THE INVENTION

According to the desulfurization method of the present invention, hydrocarbon oil such as kerosene containing benzothiophenes and dibenzothiophenes can be efficiently desulfurized under comparatively mild conditions by using a suitable combination of a solid acid desulfurization agent and an activated carbon desulfurization agent, and further combining a metallic desulfurization agent, as required.

Hydrocarbon oil containing trace sulfur compounds in addition to benzothiophenes and dibenzothiophenes can be given as a raw material hydrocarbon oil that can take the effect of the present invention. As such a hydrocarbon oil, any hydrocarbon oil which contains benzothiophenes and dibenzothiophenes may be used as a raw fuel for a fuel cell may be used. Although kerosene is given as a typical example, any hydrocarbon oil such as a kerosene mixture blended with a light hydrocarbon oil fraction such as naphtha, a kerosene mixture blended with a heavy hydrocarbon oil fraction such as gas oil, a hydrocarbon fraction having a narrower boiling point range than the commercial kerosene, hydrocarbon oil obtained by removing specific components such as aromatic hydrocarbons from the commercial kerosene, and the like can be used.

Benzothiophenes can be efficiently removed by a solid acid desulfurization agent at a temperature in a range from an ambient temperature (5 to 35°C) to about 150°C without applying a pressure under the atmosphere of gas substantially including no hydrogen gas. A temperature is more preferably in a range from 40 to 120°C. The solid acid desulfurization agent, however, exhibits the desulfurization performance even at an ambient temperature, although its life may be shortened to some extent.

On the other hand, the solid acid desulfurization agent exhibits low activity to dibenzothiophenes, particularly alkyl dibenzothiophenes having many alkyl groups. It is difficult to maintain a desired desulfurization performance for a long period of time. Use of an activated carbon desulfurization agent at a temperature of 100°C or less is effective for removing dibenzothiophenes. The activated carbon desulfurization agent has only low benzothiophene-removing capability, but exhibits high performance in removing dibenzothiophenes. Though some amount of other trace sulfur compounds can be removed by using the solid acid desulfurization agent or activated carbon desulfurization agent, the sulfur compounds, which can be removed by these desulfurization agents only with difficulty can be removed by using a metallic desulfurization agent. When the metallic desulfurization agent is used, a temperature of 100°C or more is preferable.

The solid acid desulfurization agent is preferably used at a temperature from about 5 to 150°C as mentioned above, and more preferably from 40 to 120°C, and particularly preferably from 60 to 100°C. The activated carbon desulfurization agent is preferably used at a temperature of 100°C or less, and particularly preferably at 0 to 80°C. The metallic desulfurization agent is preferably used at a temperature from about 10 to 300°C, more preferably from 100 to 250°C, and particularly preferably from 120 to 200°C. Therefore, a process of using the activated carbon desulfurization agent as a first desulfurization agent, and then the solid acid desulfurization agent as a second desulfurization agent, and, if necessary, further using the metallic desulfurization agent as a third desulfurization agent is preferable due to simplicity and convenience of a process unit, because such a process allows a sequential temperature rise without requiring any cooling means on the process route. It is possible to use the solid acid desulfurization agent as a first desulfurization agent, then the activated carbon desulfurization agent as a second desulfurization agent, and, if necessary, to further use the metallic desulfurization agent as a third desulfurization agent. This process makes it possible to remove not only benzothiophenes, but also a part of the dibenzothiophenes by using the solid acid desulfurization agent, whereby it becomes unnecessary for the activated carbon desulfurization agent to remove all benzothiophenes, and allows the activated carbon desulfurization agent to selectively remove only alkyl dibenzothiophenes with many alkyl groups, of which the removal is particularly difficult by using the solid acid desulfurization agent. In this instance, a nickel-containing desulfurization agent having the capability of removing alkyl dibenzothiophenes is preferably used as the metallic desulfurization agent.

The location in which each desulfurization agent is used may be inside a fuel cell system, a movable tank storage to deliver kerosene and the like for home use or commercial use (a small lorry equipped with a tank), a service station (a fuel oil selling store), an oil terminal or a petroleum refinery, and the like.

In order for a fuel cell user to run a fuel cell by using the same kerosene as used in a kerosene stove without purchasing special kerosene for exclusive use for the fuel cell, it is a preferable to use all the desulfurization agents (two or three types of desulfurization agents) in a fuel cell system. It is desirable to locate the solid acid desulfurization agent and metallic desulfurization agent inside or near the fuel cell unit in order to enable these desulfurization agents, which are preferably heated during use, to utilize exhaust heat from the fuel cell unit. The activated carbon desulfurization agent, which does not require heating, need not be located inside or near the fuel cell unit, but may be located anywhere in the fuel supply pipe from a kerosene tank to the fuel cell system.

The desulfurization system of the present invention can be installed between a kerosene tank and a fuel cell system which normally requires special kerosene with a sulfur content of 0.5 mass ppm or less, even in the case where the kerosene with a sulfur content of more than 0.5 mass ppm which is used in an conventional kerosene stove is used.

If a desulfurization device loaded with the solid acid desulfurization agent and/or activated carbon desulfurization agent is installed in a movable tank storage, only a hydrocarbon oil such as kerosene to be used for a fuel cell may be fed to the desulfurization device at an ambient temperature without a special heating device, thereby it is possible to distribute desulfurized hydrocarbon oil to fuel cell systems installed in individual homes or the like. Since the sulfur content of the hydrocarbon oil is significantly reduced after desulfurization, it is unnecessary to install a large desulfurization device in the fuel cell system. The desulfurization device of the present invention is thus particularly effective when downsizing the fuel cell system is necessary due to restriction of the location in which the fuel cell system is installed. When the desulfurization device is already installed in a fuel cell system of an individual home or the like, it is possible to extend the life of the desulfurization agent loaded therein.

When the movable tank storage which delivers kerosene to each home is equipped with a desulfurization device, it is also possible to supply the same kerosene as used in a kerosene stove conventionally from that movable tank storage without processing the kerosene in the desulfurization device. It is possible to deliver kerosene to be used in a kerosene stove to a service station, and then desulfurize the kerosene in the small movable tank storage equipped with a desulfurization device according to the desulfurization method of the present invention, whereby kerosene which is easy to be desulfurized can be prepared only in an amount necessary.

When hydrocarbon oil for fuel cells is transported in a movable tank storage (a lorry equipped with a tank) which is exclusively used for the hydrocarbon oil, it is preferable to transport hydrocarbon oil desulfurized in a refinery, an oil terminal, a service station, or the like using the first desulfurization agent or a combination of the first desulfurization agent and the second desulfurization agent. In such a case, since the sulfur content of the hydrocarbon oil delivered to the fuel cell system in each home is significantly reduced, delivery of such a hydrocarbon oil with a small sulfur content is also effective when the fuel cell system requires downsizing due to the locational limit to install the fuel cell system. When the home fuel cell system is already equipped with a desulfurization device, such hydrocarbon oil with a reduced sulfur content can extend the life of the desulfurizing agent.

When hydrocarbon oil for exclusive use in fuel cells is produced in an oil terminal or a refinery, it is preferable to use the first desulfurization agent or the first and second desulfurization agents in the oil terminal or the refinery.

Since the solid acid desulfurization agent and metallic desulfurization agent are used preferably while heating, it is desirable to use these desulfurization agents within the fuel cell system so that the exhaust heat from the fuel cell can be utilized.

Therefore, it is preferable to used the first desulfurization agent in a desulfurization device installed in an oil terminal, a refinery, a service station, or a movable tank storage to deliver kerosene, and to use the second desulfurization agent or the second and third desulfurization agents within the fuel cell system while utilizing exhaust heat from the fuel cell.

As mentioned above, kerosene, a mixture of kerosene and naphtha, a mixture of kerosene and gas oil, a kerosene fraction having a narrower boiling range than commercial kerosene, a kerosene fraction obtained by extracting specific components such as aromatic hydrocarbons from the commercial kerosene, and the like can be given as hydrocarbon oils desulfurized by the method of the present invention. Typical kerosene is a hydrocarbon oil containing hydrocarbons having about 12 to 16 carbon atoms as a major component and having a density (15°C) of 0.790 to 0.850 g/cm$^3$ and a boiling point of about 150 to 320°C. Such kerosene contains a large amount of paraffin hydrocarbons, 0 to about 30% by volume of aromatic hydrocarbons, and 0 to about 5% by volume of polycyclic aromatic hydrocarbons. Generally, kerosene is represented as No. 1 kerosene specified in JIS K2203 as a lamp fuel, heating fuel, and cooking fuel, and No. 1 kerosene has properties of a flash point of 40°C or higher, a 95% distillation point of 270°C or lower, a sulfur content of 0.008 mass % or less, a smoke point of 23 mm or more (or 21 mm or more in cold weather), corrosiveness to copper (50°C, 3 hours) of 1 or less, and a Saybolt color of +25 or more.

Usually, such kerosene has a sulfur content of from several ppm to 80 ppm, and a nitrogen content of from several ppm to about 10 ppm.

Major sulfur compounds contained in typical hydrocarbon oils such as kerosene are benzothiophenes and dibenzothiophenes, but other sulfur compounds such as thiophenes, mercaptans (thiols), sulfides, disulfides, and carbon disulfide may also be included. A gas chromatograph-flame photometric detector (GC-FPD), a gas chromatograph-atomic emission detector (GC-AED), a gas chromatograph-sulfur chemiluminescence detector (GC-SCD), a gas chromatograph-inductively coupled plasma mass spectrometer (GC-ICP-MS), and the like are used for qualitative and quantitative analyses of sulfur compounds in hydrocarbon oil. GC-ICP-MS is most preferable for analysis of the mass ppb level,

Benzothiophenes are sulfur compounds, which are heterocyclic compounds having one or more sulfur atoms as hetero atoms, and the heterocyclic ring is a five or six member ring, has aromaticity (the heterocyclic ring has two or more double bonds), and further is condensed with one benzene ring , and derivatives of such sulfur compounds.

Benzothiophene is a sulfur compound having a molecular formula of $C_8H_6S$ and a molecular weight of 134, and is also called thionaphthene or thiocoumarone. As other typical benzothiophenes, alkyl benzothiophenes such as methylbenzothiophene, dimethylbenzothiophene, trimethylbenzothiophene, tetramethylbenzothiophene, pentamethylbenzothiophene, hexamethylbenzothiophene, methylethylbenzothiophene, dimethylethylbenzothiophene, trimethylethylbenzothiophene, tetramethylethylbenzothiophene, pentamethylethylbenzothiophene, methyldiethylbenzothiophene, dimethyldiethylbenzothiophene, trimethyldiethylbenzothiophene, tetramethyldiethylbenzothiophene, methylpropylbenzothiophene, dimethylpropylbenzothiophene, trimethylpropylbenzothiophene, tetramethylpropylbenzothiophene, pentamethylpropylbenzothiophene, methylethylpropylbenzothiophene, dimethylethylpropylbenzothiophene, trimethylethylpropylbenzothiophene, and tetramethylethylpropylbenzothiophene; thiachromene (benzothia-γ-pyrane, molecular formula: $C_9H_8S$, molecular weight: 148), dithianaphthalene (molecular formula: $C_8H_6S_2$, molecular weight: 166), and derivatives thereof can be given.

Dibenzothiophenes are sulfur compounds, which are heterocyclic compounds having one or more sulfur atoms as hetero atoms, and the heterocyclic ring is a five or six member ring, has aromaticity (the heterocyclic ring has two or more double bonds), and further is condensed with two benzene rings, and derivatives of such sulfur compounds. Dibenzothiophene is a sulfur compound having a molecular formula of $C_{12}H_8S$ and a molecular weight of 184, and is also called diphenylene sulfide, biphenylene sulfide, or diphenylene sulfate. 4-methyldibenzothiophene and 4,6-dimethyldibenzothiophene are well known as compounds that can be hardly desulfurized by hydrodesulfurization. As other typical dibenzothiophenes, alkyl dibenzothiophenes such as trimethyldibenzothiophene, tetramethyldibenzothiophene, pentamethyldibenzothiophene, hexamethyldibenzothiophene, heptamethyldibenzothiophene, octamethyldibenzothiophene, methylethyldibenzothiophene, dimethylethyldibenzothiophene, trimethylethyldibenzothiophene, tetramethylethyldibenzothiophene, pentamethylethyldibenzothiophene, hexamethylethyldibenzothiophene, heptamethylethyldibenzothiophene, methyldiethyldibenzothiophene, dimethyldiethyldibenzothiophene, trimethyldiethyldibenzothiophene, tetramethyldiethyldibenzothiophene, pentamethyldiethyldibenzothiophene, hexamethyldiethyldibenzothiophene, heptamethyldiethyldibenzothiophene, methylpropyldibenzothiophene, dimethylpropyldibenzothiophene, trimethylpropyldibenzothiophene, tetramethylpropyldibenzothiophene, pentamethylpropyldibenzothiophene, hexamethylpropyldibenzothiophene, heptamethylpropyldibenzothiophene, methylethylpropyldibenzothiophene, dimethylethylpropyldibenzothiophene, trimethylethylpropyldibenzothiophene, tetramethylethylpropyldibenzothiophene, pentamethylethylpropyldibenzothiophene, and hexamethylethylpropyldibenzothiophene, and thianthrene (diphenylene disulfide: molecular formula: $C_{12}H_8S_2$, molecular weight: 216), thioxanthene (dibenzothiopyran, diphenylmethane sulfide, molecular formula: $C_{13}H_{10}S$, molecular weight: 198), and derivatives thereof can be given.

Thiophenes are sulfur compounds which are heterocyclic compounds having one or more sulfur atoms as hetero atoms, and the heterocyclic ring is a five or six member ring, has aromaticity (the heterocyclic ring has two or more double bonds), and is condensed with no benzene ring, and derivatives of such sulfur compounds. Also included are compounds having heterocyclic rings condensing to each other. Thiophene is a sulfur compound having a molecular formula of $C_4H_{14}S$ and a molecular weight of 84.1, and is also called thiofuran. As other typical thiophenes, methylthiophene (thiotolene, molecular formula: $C_5H_6S$, molecular weight: 98.2), thiapyrane (penthiophene, molecular formula: $C_5H_6S$, molecular weight: 98.2), thiophthene (molecular formula: $C_6H_4S_2$, molecular weight: 140), tetraphenylthiophene (thionessal, molecular formula: $C_{20}H_{20}S$, molecular weight: 388), dithienylmethane (molecular formula: $C_9H_8S_2$, molecular weight: 180), and derivatives threrof can be given.

Both thiophenes and benzothiophenes have the high reactivity of a heterocyclic ring which contains a sulfur atom as a hetero atom, and heterocyclic ring cleavage, a reaction with an aromatic ring, or decomposition easily occurs in the presence of a solid acid desulfurization agent. Dibenzothiophenes exhibit lower reactivity as compared with thiophenes and benzothiophenes since dibenzothiophenes have benzene rings bonded to both sides of the thiophene ring. It is particularly difficult to remove dibenzothiophenes which have many alkyl groups such as trimethyldibenzothiophene, tetramethyldibenzothiophene, pentamethyldibenzothiophene and the like using a solid acid desulfurization agent.

Mercaptans are sulfur compounds, RSH (wherein R is a hydrocarbon group such as an alkyl group or an aryl group), which have a mercapto group (-SH), and are also called thiols or thioalcohols. A mercapto group has high reactivity and easily reacts particularly with a metal. As examples of typical mercaptans, methylmercaptan, ethylmercaptan, propylmercaptan (including isomers), butylmercaptan (including isomers such as tert-butylmercaptan), pentylmercaptan, hexylmercaptan, heptylmercaptan, octylmercaptan, nonylmercaptan, decylmercaptan, and thiophenols (Ar-SH, wherein Ar is an aryl group) can be given.

Sulfides, also called thioethers, are generic name for alkyl sulfide and aryl sulfide, and are sulfur compounds represented by the formula R-S-R', wherein R and R' are hydrocarbon group such as alkyl group and aryl group. Sulfides are compounds in which two hydrogen atoms of hydrogen sulfide are replaced with alkyl group or the like. Sulfides are classified into chain sulfides and cyclic sulfides. Chain sulfides are sulfur compounds having no heterocyclic rings which contain a sulfur atom as a hetero atom among sulfides. Typical chain sulfides include dimethyl sulfide, methyl ethyl sulfide, methyl propyl sulfide, diethyl sulfide, methyl butyl sulfide, ethyl propyl sulfide, methyl pentyl sulfide, ethyl butyl sulfide, dipropyl sulfide, methyl hexyl sulfide, ethyl pentyl sulfide, propyl butyl sulfide, methyl heptyl sulfide, ethyl hexyl sulfide, propyl pentyl sulfide, dibutyl sulfide, and the like. Cyclic sulfides are sulfur compounds having a heterocyclic ring containing one or more sulfur atoms as hetero atoms among sulfides, and have not aromaticity (a five or six member ring having no heterocyclic ring containing two or more double bonds). As typical cyclic sulfides, tetrahydro thiophene (tetramethylene sulfide, molecular formula: $C_4H_8S$, molecular weight: 88.1), methyltetrathiophene, and the like can be given.

Disulfides are bisulfides, and are general terms for alkyl disulfides and aryl disulfides. These are sulfur compounds represented by the formula R-S-S-R', wherein R and R' are hydrocarbon groups such as alkyl groups and the like. The hydrocarbon groups representing R and R' have preferably 2 to 8 carbon atoms in total. Specific examples include chain disulfides such as dimethyl disulfide, methyl ethyl disulfide, methyl propyl disulfide, diethyl disulfide, methyl butyl disulfide, ethyl propyl disulfide, methyl pentyl disulfide, ethyl butyl disulfide, dipropyl disulfide, methyl hexyl disulfide, ethyl pentyl disulfide, propyl butyl disulfide, methyl heptyl disulfide, ethyl hexyl disulfide, propyl pentyl disulfide, dibutyl disulfide and the like.

Since sulfur contained in hydrocarbon oil is a catalyst poison of a reforming catalyst in a hydrogen production process, sulfur must be strictly removed before coming in contact with a reforming catalyst when hydrocarbon oil such as kerosene is used as a raw fuel of a fuel cell. The sulfur content after desulfurization is preferably 50 mass ppb or less, more preferably 20 mass ppb or less, and still more preferably 5 mass ppb or less.

The desulfurization method of the present invention can reduce sulfur compounds to an extremely low concentration. If dibenzothiophenes, particularly alkyl dibenzothiophenes with many alkyl groups, of which the removal is comparatively difficult, are removed by using an activated carbon desulfurization agent as a first desulfurization agent in a movable tank storage, a service station, an oil terminal, or a refinery, it is possible to easily reduce the sulfur content to 50 mass ppb or less, preferably 20 mass ppb or less, and more preferably 5 mass ppb or less, in a compact device containing a small amount of desulfurization agent by using the second desulfurization agent and, as required, also the third desulfurization agent, in stationary type fuel cells for home use or commercial use, or in a movable fuel cell system (for example, a fuel cell vehicle).

The solid acid desulfurization agent used in the present invention catalyzes the reactions among sulfur compounds and/or between sulfur compounds and aromatic hydrocarbons (i.e. a reaction of thiophene ring and a benzene ring) in hydrocarbon oil to accelerate production of heavy sulfur compounds and, at the same time, has a function as an adsorbent to adsorb sulfur compounds in the hydrocarbon oil, particularly the produced heavy sulfur compounds. Production of heavy sulfur compounds in the present invention results from the reaction among sulfur compounds or the reaction between a thiophene ring and a benzene ring. The reaction differs from the production of heavy sulfur compounds by alkylation of sulfur compounds contained in naphtha with an alkylation agent (such as an olefin) in the presence of a solid acid. Thus, in the present invention no special alkylation agent such as an olefin is necessary.

As specific examples of the solid acid desulfurization agent, in addition to solid acids such as zeolite, silica alumina, activated clay, solid superacids such as sulfated zirconia, sulfated alumina, sulfated tin oxide, sulfated iron oxide, tungstated zirconia, and tungstated tin oxide can be given.

The solid acid desulfurization agent is preferably at least one selected from a proton type faujasite zeolite, a proton type mordenite, and a proton type β-zeolite.

Since zeolite with a smaller silica/alumina ratio contains a lager amount of acid acting as adsorption sites, the silica/alumina ratio is preferably 100 mol/mol or less, and more particularly 30 mol/mol or less.

Zeolite is a general term for crystalline water-containing aluminosilicate represented by the general formula of $xM_{2/n}O \cdot Al_2O_3 \cdot ySiO_2 \cdot zH_2O$, wherein n is a valency of cation M, x is number of 1 or less, y is number of 2 or more, and z is number of 0 or more. Zeolite structures are discussed in detail in the homepage of the Structure Commission of the International Zeolite Association (IZA) (http://www.iza-structure.org/) and the like.

The structure of zeolite consists of tetrahedron structures of $SiO_4$ or $AlO_4$ having Si or Al as a main atom which is regularly arranged in three dimensions. Since the tetrahedron structure of $SiO_4$ is negatively charged, that structure holds a charge compensation cation such as an alkali metal or an alkaline earth metal in pores or caves. The charge compensation cation can be easily replaced with another cation such as a proton. Moreover, the $SiO_2/Al_2O_3$ molar ratio increases by an acid treatment and the like, which results in increase of the acid strengths and a decrease in the amount of solid acid. It is a preferable not to reduce the amount of solid acid, since adsorption of a sulfur compound is only slightly affected by the acid strength.

The structural units of the skeleton structure of the faujasite zeolite (FAU) are a 4-membered ring, a 6-membered ring and a double 6-membered ring. Micropore is three-dimensional structure, its inlet port is circle formed of a non-plane 12-membered ring. The crystal system is cubic. Faujas stone which is natural faujasite-type zeolite is represented by the molecular formula of $(Na_2,Ca,Mg)_{29} \cdot Al_{58}Si_{134}O_{384} \cdot 240H_2O$ or the like and has a micropore diameter of 7.4 × 7.4Å and an unit cell size of 24.74Å. Faujasite-type synthetic zeolite has an X-type and a Y-type. NaX-type zeolite is shown by the molecular formula $Na_{88}[(AlO_2)_{88}(SiO_2)_{104}] \cdot 220H_2O$ and the like and can adsorb molecules with an effective diameter up to about 10Å. NaY-type zeolite can adsorb molecules with an effective diameter up to about 8Å. The faujasite-type zeolite preferably used in the present invention is shown by the general formula $xNa_2O \cdot Al_2O_3 \cdot ySiO_2$, wherein preferably x < 1 and y < 100, more preferably x < 0.1 and y < 100, and particularly preferably x < 0.1 and y < 30. The $SiO_2/Al_2O_3$ molar ratio is preferably 100 mol/mol or less, more preferably 30 mol/mol or less, and particularly preferably 10 mol/mol or less. The amount of cations other than protons such as sodium is preferably 5 mass % or less, and more preferably 3 mass % or less, and particularly preferably 1 mass % or less.

The structural unit of the skeleton structure of the mordenite (MOR) is a 4-membered ring, a 5-membered ring, and an 8-membered ring. Micropores have one-dimensional and three-dimensional structures, and its inlet port is ellipse formed from a non-plane 12-membered ring and 8-membered ring. The crystal system is orthorhombic. Mordenite is one type of natural zeolite, represented by a molecular formula of $Na_8Al_8Si_{40}O_{96} \cdot 24H_2O$ or the like, and has two channels, one of which is a one-dimensional structure of micropores of 12-membered ring with a diameter of 6.5 × 7.0Å and the other a three dimensional structure of an 8-membered ring with a diameter of 2.6 × 5.7Å. Both are connected and the unit pore has a dimension of 18.1 × 20.5 × 7.5Å. Mordenite exists also as synthetic zeolite. Na mordenite can adsorb molecules with an effective diameter up to about 7Å. The mordenite preferably used in the present invention is shown by the general formula $xNa_2O \cdot Al_2O_3 \cdot ySiO_2$, wherein preferably x < 1 and y < 100, and particularly preferably x < 0.1 and y < 30. The $SiO_2/Al_2O_3$ molar ratio is preferably 100 mol/mol or less, more preferably 30 mol/mol or less, and particularly preferably 10 mol/mol or less. The amount of cations other than protons such as sodium is preferably 5 mass % or less, more preferably 3 mass % or less, and particularly preferably 1 mass % or less.

The structural units of the skeleton structure of the β-zeolite (BEA) are a 4-membered ring, a 5-membered ring, and a 6-membered ring. Micropores have two-dimensional structures, and the inlet port is circle formed from a non-plane 12-membered ring. The crystal system is tetragonal. Beta polymorph A is shown by the molecular formula $Na_7 \cdot Al_{17}Si_{57}O_{128}$ or the like, and has micropores of 6.6 × 6.7Å and 5.6 × 5.6Å, and its unit pore size is 12.661 × 12.661 × 26.406Å. The $SiO_2/Al_2O_3$ molar ratio is preferably 100 mol/mol or less, more preferably 30 mol/mol or less, and particularly preferably 10 mol/mol or less. The amount of cations other than protons such as sodium is preferably 5 mass % or less, and more preferably 3 mass % or less, and particularly preferably 1 mass % or less.

The charge compensation cation of zeolite used in the present invention is a proton, i.e., hydrogen. The amount of cations other than the proton, such as sodium, potassium, magnesium, calcium, and the like is preferably 5 mass % or less, more preferably 3 mass % or less, and particularly preferably 1 mass % or less.

Zeolite crystals used in the present invention preferably have properties of crystallinity of 80% or more, and particularly preferably 90% or more; a crystal diameter of 5 μm or less, and particularly preferably 1 μm or less; an average particle diameter of 30 μm or less, and particularly preferably 10 μm or less; and a specific surface area of 300 $m^2/g$ or more, and particularly preferably 400 $m^2/g$ or more.

A solid superacid catalyst refers to a catalyst comprising a solid acid with an acid strength higher than that of 100% sulfuric acid of which the Hammett acidity function H0 is -11.93, and includes, for example, catalysts comprising a sulfate radical, antimony pentafluoride, tantalum pentafluoride, boron trifluoride, or the like supported on or attached to a carrier comprising hydroxide or oxide of silicon, aluminum, titanium, zirconium, tungsten, molybdenum or iron, graphite, an ion-exchange resin or the like; catalysts comprising tungsten oxide ($WO_3$) supported on zirconium oxide ($ZrO_2$), stannic oxide ($SnO_2$), titanium dioxide ($TiO_2$), ferric oxide ($Fe_2O_3$), or the like supported on or attached to the carrier; and a fluorinated sulfonic acid resin. Among them, sulfated zirconia, sulfated alumina, sulfated tin oxide, sulfated iron oxide, or sulfated titania obtained by treating zirconia, alumina, tin oxide, iron oxide, or titanium dioxide with sulfuric acid according to the proposal by the present applicant in advance; and tungstated zirconia or tungstated tin oxide obtained by kneading a mixture of two or more metal hydroxides and/or hydrated oxides and calcining the kneaded product, are preferably used (see, for example, JP-B-S59-6181, JP-B-S59-40056, JP-A-H04-187239, JP-A-H04-187241, Japanese Patent No. 2566814, Japanese Patent No. 2992972, Japanese Patent No. 3251313, Japanese Patent No. 3328438, Japanese Patent No. 3432694, Japanese Patent No. 3517696, Japanese Patent No. 3553878, and Japanese Patent No. 3568372).

The acid strength ($H_0$) is defined by the capability of acid points on the surface of the catalyst to donate protons to a base or to receive electron pairs from a base, and is indicated by a pKa value. The acid strength can be measured by a known indicator method or a gaseous base adsorption method. The acid strength of a solid acid desulfurization agent can be directly measured by using an acid-base conversion indicator with a known pKa value, for example. If the catalyst surface is observed to change its color to an acidic color of indicator when the catalyst is immersed in a dry cyclohexane or a sulfuly chloride solution, such as p-nitrotoluene (pKa value; -11.4), m-nitrotoluene (pKa value; -12.0), p-nitrochlorobenzene (pKa value; -12.7), 2,4-dinitrotoluene (pKa value; -13.8), 2,4-dinitrofluorobenzene (pKa value; -14.5), or 1,3,5-trichlorobenzene (pKa value; -16.1), the acid strength of that catalyst is equivalent to or smaller than the pKa value of the indicator which changes its color to the acidic color. It is reported that the acid strength of a catalyst cannot be measured using the indicator when the catalyst colors, but it can be presumed from the isomerization activity of butane and pentane ("Studies in Surface Science and Catalysis" Vol. 90, ACID-BASE CATALYSIS II, p. 507 (1994)).

Although the above-mentioned zeolite and solid superacid catalyst can be used as is as the solid acid desulfurization agent, a formed product containing 30 mass % or more, particularly 60 mass % or more, of the zeolite or the solid superacid catalyst is preferably used. A formed product with a small size, particularly that having a spherical shape is preferable in order to increase the concentration gradient of sulfur compounds in the case of a continuous process, to the extent that the pressure difference between the inlet and outlet of the vessel loaded with the desulfurization agent is not unduly increased. When the desulfurization agent is spherical in shape, its diameter is preferably 0.5 to 5 mm, and particularly preferably 1 to 3 mm. When the desulfurization agent is columnar in shape, the diameter is preferably 0.1 to 4 mm, and particularly preferably 0.12 to 2 mm, and the length is preferably 0.5 to 5 times that of the diameter, particularly preferably 1 to 2 times.

The specific surface area of the solid acid desulfurization agent, including the solid superacid catalyst, affects adsorption capacity of sulfur compounds and is preferably 100 $m^2/g$ or more, more preferably 200 $m^2/g$ or more, and particularly preferably 300 $m^2/g$ or more. The pore volume of pores with a diameter of 10Å or less is preferably 0.10 ml/g or more, particularly preferably 0.20 ml/g or more, in order to increase the adsorption capacity of sulfur compounds. The pore volume of pores with a diameter of from 10Å to 0.1 $\mu$m is preferably 0.05 ml/g or more, particularly preferably 0.10 ml/g or more, in order to increase the diffusion rate of sulfur compounds in the pores. The pore volume of pores with a diameter of 0.1 $\mu$m or more is preferably 0.3 ml/g or less, particularly preferably 0.25 ml/g or less, in order to increase mechanical strength of the formed desulfurization agent. The specific surface area and the total pore volume are usually measured by a nitrogen adsorption method, and the macropore volume is measured by a mercury intrusion method. The nitrogen adsorption method is simple and commonly used. The method is described in various published documents, for example, Kazuhiro Washio: Shimazu Journal, 48 (1), 35-49 (1991), and ASTM (American Society for Testing and Materials) Standard Test Method D 4365-95.

When a formed zeolite is used, the zeolite may be dried and calcined after forming as described in JP-A-4-198011, or zeolite powder mixed with a binder, as required, may be formed, dried, and calcined.

As examples of binders, alumina, clay such as smectite, and an inorganic binder such as water glass can be given. These binders may be added in an amount necessary for forming. Although not particularly limited, the binder is used usually in an amount of about 0.05 to 30 mass % of the raw material. Fine particles of an inorganic material such as silica, alumina, another zeolite or the like or organic materials such as activated carbon may be mixed to increase adsorptivity of sulfur compounds which are adsorbed in zeolite only with difficulty, or the amount of mesopores and macropores may increase to improve the diffusion rate of sulfur compounds. The adsorption performance may also be increased by compositing zeolite with a metal. In the case of particles, the particles usually have an infinite form with an average diameter of 0.8 to 1.7 mm. The breaking strength of a carrier is preferably 3.0 kg /pellet or more, particularly preferably 3.5 kg/pellet or more, thereby preventing the adsorbent from cracking. Usually, the breaking strength is measured using a compressive strength measurer such as a Kiya-type tablet breaking-strength measurer (Toyama Sangyo Co., Ltd.).

As the activated carbon desulfurization agent, the desulfurization agent containing carbon material previously proposed by the applicant of the present invention is preferably used (see WO 03/097771).

The carbon material preferably has a specific surface area of 500 $m^2/g$ or more, and more preferably 2,000 $m^2/g$ or more, and a micropore specific surface area (Smicro [$m^2/g$]), a micropore external pore volume (Vext [$cm^3/g$]), and a micropore external specific surface area (Sext [$m^2/g$]) of the carbon material preferably satisfy the following formula (1).

$$\mathrm{Smicro} \times 2 \times \mathrm{Vext}/\mathrm{Sext} > 3.0 \qquad (1)$$

It is preferable for the carbon material to have a large specific surface area and a sufficient amount of mesopores with a pore diameter of about 20 to 500Å. Parameters used in the analysis of the carbon material such as a specific surface area, pore diameter, and pore volume are usually measured by a gas adsorption method, particularly a nitrogen adsorption method, in which physical adsorption based on the intermolecular force between gas molecules and the solid surface is used. Since many carbon materials have an average pore diameter of 20Å or less, the analysis requires special attention.

The commonly used BET (Brunauer-Emmett-Teller) method is a method to determine the specific surface area of a carbon material according to the following formula (2),

$$x/V/(1 - x) = 1/Vm/C_B + (C_B - 1)x/Vm/C_B \qquad (2)$$

wherein x is a relative pressure, V is the amount of adsorption when the relative pressure is x, Vm is the amount of monolayer adsorption, and $C_B$ is a constant value (> 0). In the BET method, the constant value $C_B$ must be positive, and a negative value is inappropriate.

When $C_B < 0$, the parameters such as a specific surface area, pore diameter, and pore volume are often measured by the Langmuir method. The specific surface area of a carbon material is determined by the Langmuir method according to the following formula (3),

$$x/V = x/Vm + 1/Vm/C_L \qquad (3)$$

wherein x is a relative pressure, V is a adsorption volume when the relative pressure is x, Vm is a monolayer adsorption volume, and $C_L$ is a constant (> 0).

Therefore, the negative constant $C_L$ is inappropriate even in the Langmuir method.

Quantitative determination of micropores by the t-plot method is also possible. In the t-plot method, the thickness of an adsorption layer t (a function of a relative pressure) is taken along the horizontal axis and the amount of adsorption is taken along the vertical axis to plot the change in the amount of adsorption of carbon material against the thickness t of an adsorption layer. In the plotted characteristics, an area $t_B$ of the thickness of adsorption layer exists in which the slope of the t-plot continuously decreases. Micropores in the area $t_B$ are filled with adsorbed gas (nitrogen) along with progress of multilayer adsorption, and that area no further functions as a surface.

Since this phenomenon is caused by filling in micropores in the thickness area $t_B$ in the adsorption layer, filling or capillary condensation of gas molecules in micropores does not occur in the areas in which the thickness t of the adsorption layer is larger or smaller than the thickness of the adsorption layer near the area $t_B$. The slope of the t-plot is thus constant. Therefore, when a straight line is drawn in the area in which the thickness t of the adsorption layer is larger than the thickness of the area $t_B$, that is, in the area in which filling of gas molecules in micropores has been completed, the specific surface area of the part which functions as the surface other than micropores of the carbon material (external specific surface area) can be determined from the slope. In addition, micropore volume can be determined by converting (to liquid) the intercept with the vertical axis of the straight line drawn in the area in which the thickness t of the adsorption layer is larger than the thickness of the area $t_B$.

Summing up the above, the adsorption amount of carbon material (V), external specific surface area of micropores (Sext [m$^2$/g]), specific surface area of micropores (Smicro [m$^2$/g]), pore volume of micropores (Vmicro [cm$^3$/g]), and external pore volume of micropores (Vext [cm$^3$/g]) can be determined by the following formulas (4) to (8),

$$V = \alpha t + \beta \ (t > t_B) \qquad (4)$$

$$Sext = \alpha \times 103 \times D \qquad (5)$$

$$Vmicro = \beta \times D \qquad (6)$$

$$Smicro = Sa - Sext \qquad (7)$$

$$Vext = Va - Vmicro \qquad (8)$$

wherein $\alpha$ [cm$^3$ (STP)/g/nm] is a slope of the straight line of the t-plot in the area in which the thickness t of the adsorption layer is larger than the thickness of the area $t_B$, $\beta$ [cm$^3$ (STP)/g] is a intercept with the vertical axis of the straight line of the t-plot in the area in which the thickness t of the adsorption layer is larger than the thickness of the area $t_B$, D is a density conversion factor (0.001547 when nitrogen is used as gas) [cm$^3$ liq/cm$^3$ (STP)], Sa is the total specific surface area [m$^2$/g], and Va is the total pore volume [cm$^3$/g], provided that Sa is the total specific surface area determined by BET method or Langmuir method as mentioned above. Va can be defined as the value obtained by converting an adsorbed gas volume at a pressure near the saturated vapor pressure to liquid, for example, obtained by multiplying the adsorbed amount [cm$^3$ (STP)/g] under a relative pressure of 0.95 by D.

A major part of the carbon material is micropores and there are almost no mesopores outside of the micropores. However, it was found that a very small amount of mesopores significantly affect adsorption of sulfur compounds. The inventors of the present invention have found a method of using the value of $2 \times$ Vext/Sext as an index showing the effect of mesopores. The value of $2 \times$ Va/Sa shows an average pore radius (Da/2) when pores are assumed to be cylindrical. That is, $2 \times$ Vext/Sext is an index showing a value close to the average pore radius (Dext/2) of mesopores. It is so good that the specific surface area of micropores and the average pore diameter of mesopores of a carbon material large in the adsorption of sulfur compounds. That is, the larger the product of the two indices (Smicro $\times$ 2 $\times$ Vext/Sext), preferably 3.0 cm$^3$/g or more, and more preferably 5.0 cm$^3$/g or more, the more excellent the adsorption performance of the carbon material. Although the reason is not clear, that value is thought to express not merely the amount of mesopores, but the requirement for mesopores with a sufficiently large diameter that can prevent blockage due to adsorption of sulfur compounds.

The activated carbon desulfurization agent may support a transition metal and/or a transition metal oxide thereon. As examples of the transition metal, silver, mercury, copper, cadmium, lead, molybdenum, zinc, cobalt, manganese, nickel, platinum, palladium, and iron can be given.

Although the activated carbon desulfurization agent can used in any form such as particles, fibers, a powder, or a formed product, formed activated carbon is preferably used. The formed activated carbon may have a shape of particles, a honeycomb, a mat, felt, or the like. Usually, the formed activated carbon has an infinite form with an average diameter of 0.8 to 1.7mm. The carrier preferably has a breaking strength of 3.0 kg/pellet or more, and particularly preferably 3.5 kg/pellet or more, in order to prevent cracking of the adsorbent.

As the metallic desulfurization agent, a product supported a metal component on a porous carrier such as alumina, a formed product produced from a mixture of an alumina and metal component or the like can be used. As the metal, silver, mercury, copper, cadmium, lead, molybdenum, zinc, cobalt, manganese, nickel, platinum, palladium, iron, and oxides thereof can be used. Copper, zinc, and nickel are preferable from the viewpoint of safety and economy. Copper is particularly preferable, because copper is not only inexpensive, but also exhibits superior performance of adsorbing sulfur compounds in the absence of hydrogen at a wide temperature range from near ambient temperature to about 300°C in an unreduced copper oxide form. An adsorbent containing a copper component supported on a porous carrier and having a specific surface area of 150 m$^2$/g or more, and preferably 200 m$^2$/g or more, can be used. The copper oxide desulfurization agent previously proposed by the applicant of the present invention is suitably used (see Japanese Patent No. 3324746).

If hydrocarbon oil contains sulfur compounds with comparatively low reactivity such as sulfides and carbon disulfide, a nickel desulfurization agent is preferably used. A nickel desulfurization agent reduced in a hydrogen atmosphere before use is particularly preferable. Since the amount of sulfides and carbon disulfide are usually very small, even if these sulfur compounds are included in kerosene, a very small amount of the nickel desulfurization agent can attain the object. Although a nickel desulfurization agent exhibits only extremely low desulfurization activity, unless heated to a high temperature of 150°C or more, the nickel desulfurization agent can exhibit slight desulfurization performance at an ambient temperature. Since the amount of sulfides and carbon disulfides which are originally contained in kerosene is very small, these sulfur compounds can be removed to a satisfactory level by a small amount of desulfurization agent even under a low temperature condition such as starting condition.

Although either a batch process or a continuous process may be used as the method for causing hydrocarbon oil to come in contact with two or three types of desulfurization agents, a continuous process in which hydrocarbon oil is caused to pass through packed beds of a formed desulfurization agent is preferred.

In the case of the continuous process, the hydrocarbon oil is caused to come in contact with a desulfurization agent preferably under pressure from 0 (normal pressure) to 50 kg/cm$^2$ G, more preferably from 0 (normal pressure) to 10 kg/cm$^2$ G, and particularly preferably from 0.1 to 3 kg/cm$^2$ G, at a flow rate of 0.1 to 100 hr$^{-1}$ LHSV, and particularly preferably 0.5 to 20 hr$^{-1}$ LHSV. The desulfurization is crried out at a temperature preferably of 5 to 150°C, more preferably 40 to 120°C, and particularly preferably 60 to 100°C, when the solid acid desulfurization agent is used, preferably at 100°C or less, and particularly preferably at 0 to 80°C, when the activated carbon desulfurization agent is used, and preferably at 10 to 300°C, more preferably 100 to 250°C, and particularly preferably 120 to 200°C, when the metallic desulfurization agent is used. When desulfurization is carried out in a movable tank storage, desulfurization at an ambient temperature without using a special heating device is particularly preferable in order to avoid a danger such as a fire.

It is desirable to remove a small amount of water in a pretreatment of adsorbent before using the adsorbent. Not only water adsorbed in the adsorbent inhibits adsorption of sulfur compounds, but also water removed from the adsorbent immediately after introduction of hydrocarbon oil is mixed into the hydrocarbon oil. The solid acid desulfurization agent is dried at about 130 to 500°C, and preferably at about 350 to 450°C. The activated carbon desulfurization agent is preferably dried at about 100 to 200°C, if dried in an oxidative atmosphere such as in air. A temperature exceeding 200°C is not preferable, since the activated carbon reacts with oxygen, resulting in a mass reduction. On the other hand, a drying temperature of about 100 to 800°C can be applied when drying in a non-oxidative atmosphere such as in nitrogen. Heat treatment conducted at a temperature of 400 to 800°C is particularly preferable because the adsorption performance of the desulfurization agent increases due to elimination of organic components and contained oxygen. The metallic desulfurization agent is preferably dried at about 100 to 200°C.

In the desulfurization system of the present invention, it is particularly preferable to use the desulfurization agents in the following order; the activated carbon desulfurization agent is used for the first, then the solid acid desulfurization agent is used for the second, and the metallic desulfurization agent is used for the third. the order of using the desulfurization agents. Since the activated carbon desulfurization agent is used preferably at a temperature of 100°C or less, and particularly preferably at 0 to 80°C, it is preferable to dispose the activated carbon desulfurization agent in the uppermost stream. It is preferable for the solid acid desulfurization agent and metallic desulfurization agent to utilize exhausted heat from the fuel cell unit or the reformer which produces hydrogen containing gas, since those agents are preferably heated during use. Since a polymer electrolyte fuel cell exhausts heat at around 80°C, the exhaust heat is preferably used for heating the solid acid desulfurization agent. It is preferable to use hot water for heating the solid acid desulfurization agent in any fuel cells having a hot water reservoir, including a polymer electrolyte fuel cell. The metal desulfurization agent is particularly preferably used at a high temperature at least 100°C higher than an ambient temperature, thus the metal desulfurization agent is preferably disposed immediately before a reforming unit which is operated at a temperature as high as 400 to 800°C.

When the activated carbon desulfurization agent and solid acid desulfurization agent are used at an ambient temperature, it is preferable to feed hydrocarbon oil to the activated carbon desulfurization agent first and then to the solid acid desulfurization agent. Since the activated carbon desulfurization agent is a physical adsorption agent which is not accompanied by a chemical reaction, the adsorption capacity is larger in the case of processing hydrocarbon oil with a higher sulfur content. It is thus preferable to locate the activated carbon desulfurization agent on an upstream side in which the hydrocarbon oil has a high sulfur content. Since the solid acid desulfurization agent adsorbs some amount of dibenzothiophenes, it is possible to remove more or less amounts of dibenzothiophenes which have not been removed by the activated carbon desulfurization agent.

Sulfur compounds contained in hydrocarbon oil such as kerosene can be roughly classified into benzothiophenes, dibenzothiophenes, and other trace sulfur compounds. Although the proportion of the sulfur compounds contained in commercial kerosene varies with each refinery and season, the amount of dibenzothiophenes is about 0 to 30%, with most of the remaining part being benzothiophenes.

Since removal of dibenzothiophenes is particularly difficult, it is desirable that dibenzothiophenes be first removed using an activated carbon desulfurization agent at locations such as a refinery, an oil terminal, a service station, and a movable tank storage in which abundant spaces and utilities are fully available. Since the activated carbon desulfurization agent can be regenerated by washing with an aromatic solvent and the like, it is preferable to adequately regenerate from time to time.

The hydrocarbon oil from which dibenzothiophenes have been removed can be easily desulfurized by using a solid acid desulfurization agent or the like to a sulfur content of 50 mass ppb or less. It is preferable to subsequently remove the remaining sulfur compounds by using a metallic desulfurization agent. When hydrocarbon oil is treated with a solid acid desulfurization agent followed by the treatment with a metallic desulfurization agent, a substantial part of the sulfur compounds has been eliminated by the solid acid desulfurization agent. Therefore, the amount of the metallic desulfurization agent used may be small. The amount of the solid acid desulfurization agent used may be an amount sufficient to desulfurize hydrocarbon oil necessary for running the fuel cell for one year, for example, in which case, the solid acid desulfurization agent may be replaced once a year.

The present invention is described in more detail below by way of examples. However, the present invention is not limited to the following examples.

Example 1

Kerosene (manufactured by Japan Energy Corp.) having a boiling point range of 158.5 to 270.0°C, a 5% distillation point of 170.5°C, a 10% distillation point of 175.0°C, a 20% distillation point of 181.5°C, a 30% distillation point of 188.0°C, a 40% distillation point of 194.5°C, a 50% distillation point of 202.5°C, a 60% distillation point of 211.0°C, a 70% distillation point of 221.0°C, an 80% distillation point of 232.0°C, a 90% distillation point of 245.5°C, a 95% distillation point of 256.5°C, a 97% distillation point of 263.5°C, a density (15°C) of 0.7982 g/ml, an aromatic content of 17.5 vol %, a saturate content of 82.5 vol %, a sulfur content of 13.6 ppm, a sulfur content originating from light sulfur compounds (sulfur compounds lighter than benzothiophene) of 16 ppb, a sulfur content originating from benzothiophenes (benzothiophene and sulfur compounds heavier than dibenzothiophene) of 9.6 ppm, a sulfur content originating from dibenzothiophenes (dibenzothiophene and sulfur compounds heavier than dibenzothiophene) of 4.0 ppm, and a nitrogen content of 1 ppm or less was used.

As a solid acid desulfurization agent, sulfated zirconia·alumina (specific surface area: 162 $m^2$/g, pore volume: 0.305 ml/g, central pore diameter: 56.4Å, zirconia; 59 mass %, alumina: 31 mass %, sulfur: 2.9 mass %) was used. As an activated carbon desulfurization agent, fibrous activated carbon ("FR-25" manufactured by Kuraray Chemical, specific surface area Sa: 2749 m²/g, pore volume Va: 0.96 cm³/g, average pore diameter Da: 14Å, micropore specific surface area Smicro: 2741 m²/g, micropore volume Vmicro: 0.94 cm³/g, micropore external surface area Sext: 8 m²/g, micropore external pore volume Vext: 0.01 cm³/g, Smicro × 2 × Vext/Sext: 8.8 cm³/g) was used.

13.7 g of the fibrous activated carbon was loaded into two columns, each having a length of 600 mm and an internal volume of 54 ml. 25 g of the sulfated zirconia alumina was loaded into a column having a length of 300 mm and an internal volume of 27 ml. The columns loaded with the fibrous activated carbon were arranged in series on the upstream side and the column loaded with the sulfated zirconia·alumina was located on the downstream side. These columns were connected. The sulfated zirconia alumina was heated to 70°C, while retaining the fibrous activated carbon at an ambient temperature (about 20°C) as is, and kerosene was flowed through at a rate of 1 ml/min for eight hours. The sulfur content of kerosene effluent from the columns was from the lower determination limit (20 ppb) to 39 ppb. The sulfur compounds were removed over a long period of time. The sulfur compounds remaining in kerosene in which the sulfur content was reduced to the lower determination limit or less were confirmed to be only sulfur compounds lighter than benzothiophene.

The sulfur content was analyzed using a fuel oxidation-ultraviolet fluorescence method sulfur analyzer, while the types of the sulfur compounds were determined using a gas chromatograph inductively coupled plasma mass spectrometer (GC-ICP-MS).

Example 2

In addition to the two types of columns used in Example 1, a column with a length of 300 mm and an internal volume of 27 mm loaded with a copper oxide desulfurization agent (specific surface area 250 m²/g, pore volume: 0.380 ml/g, copper: 7.5 mass %, carrier: activated alumina) was used. From the upstream to the downstream, two columns loaded with the fibrous activated carbon desulfurization agent as a first desulfurization agent, one column loaded with the sulfated zirconia·alumina as a second desulfurization agent, and one column loaded with the copper oxide desulfurization agent as a third desulfurization agent were serially arranged and connected. The sulfated zirconia·alumina and the copper oxide desulfurization agent were heated to 70°C, while retaining the fibrous activated carbon at an ambient temperature (about 20°C) as is, and kerosene was flowed through at a rate of 1 ml/min for eight hours. The sulfur content of kerosene effluent from the columns was not more than the lower determination limit (20 ppb). The sulfur compounds were removed over a long period of time.

Comparative Example 1

2.7 g of fibrous activated carbon was loaded into a column with a length of 300 mm and an internal volume of 27 ml. Kerosene was flowed through the column at an ambient temperature (about 30°C) at a rate of 1 ml/min for eight hours. Dibenzothiophenes were not present in the kerosene effluent from the column, but almost all benzothiophenes remained unremoved. The sulfur content after seven hours was confirmed to be 10.9 mass ppm, with the benzothiophene residual concentration being 8.9 mass ppm. It was confirmed that no benzothiophenes can be removed if fibrous activated carbon is used alone.

Comparative Example 2

0.88 kg of the fibrous activated carbon was loaded in four columns, each having a length of 292 mm and an internal volume of 2 1. Kerosene was flowed through the columns at an ambient temperature (10 to 20°C) at a rate of 1 g/min for 44 days. Dibenzothiophenes were not present in the kerosene effluent from the column, but almost all benzothiophenes remained unremoved from the very beginning. The sulfur content was 9.3 mass ppm after two days, but remained at 9.1 mass ppm after 44 days, with the benzothiophene residual concentration being 8.9 mass ppm. It was confirmed that, although dibenzothiophenes can be removed by using fibrous activated carbon alone, benzothiophenes cannot be removed at all.

Comparative Example 3

25 g of the sulfated zirconia·alumina was loaded into a column having a length of 300 mm and an internal volume of 27 ml. Kerosene was flowed through the column at an ambient temperature (about 25°C) at a rate of 1 ml/min for eight hours. A major part of the benzothiophenes was removed from the kerosene effluent from the column, but dibenzothiophenes remained unremoved from the beginning. The sulfur content after seven hours was confirmed to be 3.8 mass ppm, with the dibenzothiophene residual concentration being 3.7 mass ppm. It was confirmed that not all the dibenzothiophenes can be removed if sulfated zirconia·alumina is used alone.

Comparative Example 4

25 g of the sulfated zirconia·alumina was loaded into a column having a length of 300 mm and an internal volume of 27 ml. Kerosene was flowed through the column at 70°C at a rate of 1 ml/min for eight hours. A major part of the benzothiophenes was removed from the kerosene effluent from the column, but dibenzothiophenes remained unremoved from the beginning. The sulfur content after seven hours was confirmed to be 2.5 mass ppm, with the dibenzothiophene residual concentration being 2.2 mass ppm. It was confirmed that not all the dibenzothiophenes can be removed by using sulfated zirconia·alumina alone.

INDUSTRIAL APPLICABILITY

According to the desulfurization method of the present invention, sulfur compounds contained in hydrocarbon oil can be efficiently removed to a very low concentration under comparatively mild conditions. If used combined with a fuel cell to form a fuel cell system, the desulfurization method can ensure easy operation and maintenance, downsize the fuel cell, and extend the life of the desulfurization agent used in a desulfurization agent installed in the fuel cell system.

**Claims**

1. A method for desulfurization of hydrocarbon oil comprising desulfurization of hydrocarbon oil containing benzothiophenes and dibenzothiophenes using a solid acid desulfurization agent and an activated carbon desulfurization agent in combination.

2. The method for desulfurization of hydrocarbon oil according to claim 1 comprising removing all or a part of the dibenzothiophenes in hydrocarbon oil using an activated carbon desulfurization agent and then removing all or a part of the benzothiophenes using a solid acid desulfurization agent.

3. The method for desulfurization of hydrocarbon oil according to claim 1 comprising removing all or a part of the benzothiophenes and the dibenzothiophenes in hydrocarbon oil using a solid acid desulfurization agent and then removing all or a part of the remaining dibenzothiophenes using an activated carbon desulfurization agent.

4. The method for desulfurization of hydrocarbon oil according to any one of claims 1 to 3, wherein the hydrocarbon oil is kerosene.

5. The method for desulfurization of hydrocarbon oil according to any one of claims 1 to 4, wherein sulfur removal by the activated carbon desulfurization agent is carried out at a temperature of 100°C or below.

6. The method for desulfurization of hydrocarbon oil according to any one of claims 1 to 5, wherein sulfur removal by the solid acid desulfurization agent is carried out at a temperature of 5 to 150°C.

7. The method for desulfurization of hydrocarbon oil according to any one of claims 1 to 6, wherein the solid acid desulfurization agent is a solid superacid selected from a group consisting of sulfated zirconia, sulfated alumina, sulfated tin oxide, sulfated iron oxide, tungstated zirconia, and tungstated tin oxide.

8. The method for desulfurization of hydrocarbon oil according to any one of claims 1 to 7, wherein the activated carbon desulfurization agent comprises a carbon material having a specific surface area of 500 $m^2$/g of more, and a micropore specific surface area ($S_{micro}$ [$m^2$/g]), a micropore external pore volume ($V_{ext}$ [$cm^3$/g]) and a micropore external specific surface area ($S_{ext}$ [$m^2$/g]) satisfying the following formula (1),

$$S_{micro} \times 2 \times V_{ext}/S_{ext} > 3.0 \qquad (1).$$

9. The method for desulfurization of hydrocarbon oil according to any one of claims 1 to 8, wherein the kerosene is desulfurized using the solid acid desulfurization agent and the activated carbon desulfurization agent, after that further treated with a metallic desulfurization agent to remove a very small amount of sulfur compounds remained.

10. The method for desulfurization of hydrocarbon oil according to claim 9, wherein the removal of the very small amount of sulfur compounds by the metallic desulfurization agent is carried out at a temperature of 10 to 300°C.

11. The method for desulfurization of hydrocarbon oil according to claim 9 or 10, wherein the metallic desulfurization agent is a copper oxide-based desulfurization agent and/or a nickel-containing desulfurization agent.

12. The method for desulfurization of hydrocarbon oil according to claim 2 comprising removing all or a part of the dibenzothiophenes using an activated carbon desulfurization agent and then removing all or a part of the benzothiophenes using a solid acid desulfurization agent in at least one location selected from a fuel cell system, a movable tank storage, a service station, an oil terminal, and a refinery.

13. The method for desulfurization of hydrocarbon oil according to claim 2 comprising removing all or a part of the dibenzothiophenes using an activated carbon desulfurization agent in at least one location selected from a movable tank storage, a service station, an oil terminal, and a refinery, then removing all or a part of the benzothiophenes using a solid acid desulfurization agent in a fuel cell system.

14. The method for desulfurization of hydrocarbon oil according to claim 3 comprising removing all or a part of the benzothiophenes and the dibenzothiophenes in the hydrocarbon oil using a solid acid desulfurization agent and then removing all or a part of the remaining dibenzothiophenes using a activated carbon desulfurization agent in at least one location selected from a fuel cell system, a movable tank storage, a service station, an oil terminal, and a refinery.

15. The method for desulfurization of hydrocarbon oil according to any one of claims 1 to 14, wherein the sulfur content in the kerosene is 20 ppb or less after desulfurization.

<table>
<tr><td colspan="2" align="center">**INTERNATIONAL SEARCH REPORT**</td><td>International application No.<br>PCT/JP2006/314623</td></tr>
</table>

| A. CLASSIFICATION OF SUBJECT MATTER |
|---|
| C10G53/08(2006.01)i, C10G17/095(2006.01)i, C10G25/00(2006.01)i, C10G29/04 (2006.01)i, C10G29/16(2006.01)i, H01M8/06(2006.01)i |

According to International Patent Classification (IPC) or to both national classification and IPC

| B. FIELDS SEARCHED |
|---|
| Minimum documentation searched (classification system followed by classification symbols)<br>C10G53/08, C10G17/095, C10G25/00, C10G29/04, C10G29/16, H01M8/06 |

| Documentation searched other than minimum documentation to the extent that such documents are included in the fields searched |
|---|
| Jitsuyo Shinan Koho      1922-1996   Jitsuyo Shinan Toroku Koho   1996-2006<br>Kokai Jitsuyo Shinan Koho   1971-2006   Toroku Jitsuyo Shinan Koho   1994-2006 |

| Electronic data base consulted during the international search (name of data base and, where practicable, search terms used)<br>Science Direct, JST7580(JDream2), JSTPlus(JDream2) |
|---|

C. DOCUMENTS CONSIDERED TO BE RELEVANT

| Category* | Citation of document, with indication, where appropriate, of the relevant passages | Relevant to claim No. |
|---|---|---|
| A | ZHOU et al., DEEP DESULRIZATION OF DIESEL FUELS BY SELECTIVE ADSORPTION WITH ACTIVATED CARBONS, Prepr.Am.Chem.Soc.Div.Pet.Chem.2004, 49(3), p.329-332 | 1-15 |
| A | Yasuhiro TOIDA, "Keiyu no Kyuchaku Datsuryu ni Okeru Kyuchakushitsu no Bunseki", The Society of Chemical Engineers, Japan Dai 69 Nenkai Kenkyu Happyo Koen Yoshishu, 2004, page 491 | 1-15 |
| A | JP 2001-279257 A (Idemitsu Kosan Co., Ltd.), 10 October, 2001 (10.10.01), Claims 8 to 9 (Family: none) | 1-15 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 October, 2006 (04.10.06) | Date of mailing of the international search report<br>17 October, 2006 (17.10.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/314623

C (Continuation). DOCUMENTS CONSIDERED TO BE RELEVANT

| Category* | Citation of document, with indication, where appropriate, of the relevant passages | Relevant to claim No. |
|---|---|---|
| P,A | Yasuhiro TOIDA, "Kotaisan Shokubai ni yoru Hanno o Tomonau Toyu no Kyuchaku Datsuryu", Dai 35 Kai Sekiyu Sekiyu Kagaku Toronkai Koen Yoshi, 27 October, 2005 (27.10.05), pages 17 to 18 | 1-15 |

Form PCT/ISA/210 (continuation of second sheet) (April 2005)

## EP 1 923 451 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0665602 B
- JP H07115842 B
- JP 3410147 B
- JP 3261192 B
- WO 2003097771 A
- JP 2003049172 A
- JP 2005002317 A
- JP 5001065 W
- WO 2005073348 A
- JP S596181 B
- JP S5940056 B
- JP H04187239 A
- JP H04187241 A
- JP 2566814 B
- JP 2992972 B
- JP 3251313 B
- JP 3328438 B
- JP 3432694 B
- JP 3517696 B
- JP 3553878 B
- JP 3568372 B
- JP 4198011 A
- WO 03097771 A
- JP 3324746 B

**Non-patent literature cited in the description**

- Studies in Surface Science and Catalysis. *ACID-BASE CATALYSIS II,* 1994, vol. 90, 507
- **KAZUHIRO WASHIO.** *Shimazu Journal,* 1991, vol. 48 (1), 35-49

18